# EUROPEAN PATENT APPLICATION

(11) **EP 2 713 103 A1**
(43) Date of publication of application: **02.04.2014**
(21) Application number: 13186188.2
(22) Date of filing: 26.09.2013
(51) Int. Cl.: F21V 33/00, F21V 8/00, F21W 131/301, F21Y 103/00

(54) **Luminous interior decoration element**

(30) Priority: 28.09.2012 IT TV20120187
(71) Applicant: Opes S.r.l., 31040 Cessalto (TV) (IT)
(72) Inventor: Rossi, Paolo, 36030 FARA VICENTINO VI (IT); Adriani, Stefano, 36040 SALCEDO VI (IT); Canali, Roberto, 31040 CESSALTO TV (IT)
(74) Representative: Modiano, Micaela Nadia

(57) **Abstract**

A lighting interior decoration element (1) which can be associated with a component of a piece of furniture or of an electrical household appliance, such as a side (3) or a door (4) or a skirting panel (5) or a riser or the front of a drawer or the bottom of a drawer or the bottom of a piece of furniture or of a shelf, the element being constituted by a single sandwich panel (6), which is composed of a reflective rear wall (7) and a transparent or semitransparent front wall (8), between which a diffuser body (9) is embedded integrally.

The panel (6) is assembled perimetrically by means of a profile (13) that contains one or more LED light strips (19) powered selectively or simultaneously.

## Description

The present invention relates to a lighting interior decoration element of the type which can be associated with a component of a piece of furniture or of an electrical household appliance, such as a side or a door or a skirting panel or a riser or the front of a drawer or the bottom of a drawer or the bottom of a piece of furniture or a shelf.

Currently it is known to use light sources to illuminate for example a surface of a piece of furniture; in the specific case of a kitchen, these light sources are usually constituted by tracks that are arranged for example below the hanging wall unit that lies above the worktop and are provided on their inside for example with neon tubes.

However, these solutions of the known type have drawbacks: it is in fact necessary to use light sources that occupy a given space, thus limiting the volume that otherwise could be used for other purposes.

Moreover, these light sources can alter considerably the aesthetics of the piece of furniture with which they are associated.

Finally, due to the dimensions and arrangement of said light sources, they are used on a very limited scale.

Patents DE 202009001138U1, FR 2891608, EP 20 1379742B1, patent applications US 2008/278932 and WO 2012/013576 are also known. Patent DE 202009001138U1 has a structural arrangement of the components that provides for the provision of a panel composed of a first component, constituted by a reflective rear wall, and a second separate component, constituted by a combination of a front glass plate and a front wall with an opaque or transparent film interposed.

A large air chamber is provided between said first and second components and an LED is arranged above it.

This solution has some considerable drawbacks: the presence of the chamber below the LED in fact entails a considerable loss of brightness of the entire panel, since a large portion of the light that is conveyed toward the rear region is lost inside the air chamber.

Poor functionality and very low efficiency therefore occur.

Patent FR 2891608 relates to a luminous face composed of a covering decoration, which is as thick as a series of LEDs and is constituted by a plate that conducts the light transmitted by the LEDs.

It is optionally transparent in order to allow the diffusion of the light and comprises light reflecting means that are embedded therein or arranged behind it.

Behind the covering decoration there is a wooden supporting panel that is spaced from the covering decoration, an air chamber being formed between the two.

This solution, too, has drawbacks: the light reflection means, be they arranged behind the plate or embedded therein, in fact create a stream of light that is transmitted directly, through the transparent plate, into the environment, thus potentially being too intense for viewing and thus causing discomfort.

The use of low-power LEDs would thwart the possibility of giving light to the environment.

In EP 1379742B1 and US 2008/278932 there are solutions that provide substantially for the use of mere glass panels with perimetric LEDs: these solutions have a considerable dispersion of the brightness generated by the LEDs, since said brightness is merely and indiscriminately scattered into the environment through the glass panel.

In WO 2012/013576 there is a cabin whose door comprises an infilling panel formed by a transparent inner plate and by an outer plate made of translucent-opaque material.

A strip of LEDs is glued to the single internal side of a wing of a frame.

The light enters the plate of transparent material without therefore undergoing any desired diffusion; the plate has a grid of rectilinear incisions on its face that is directed toward the plate; so the incisions facilitate the propagation of the light on a plane that lies directly behind the plate.

This solution, too, has drawbacks: there is in fact again a scattering of the brightness generated by the LEDs and the light is only slightly propagated and therefore diffuses in a way such as to illuminate the plate of opalescent material from the back, which plate thus shields said light and limits the propagation of the light flux.

The aim of the present invention is to solve the described technical problems, eliminating the drawbacks of the cited background art and thus providing an invention that makes it possible both to illuminate in an optimum manner a surface or an area that is part of a piece of furniture or is adjacent thereto and allows optimum light transmission, along a preferred direction, to the surrounding environment and makes it possible to avoid altering the shape of said piece of furniture while having optimum functionality, an optimum directionality that can be imparted to the light and a very high efficiency.

Within the scope of this aim, an object of the invention is to have a limited space occupation so as to avoid limiting the ability of the user to work on said piece of furniture.

Another object is to provide an invention whose shape, arrangement and application enhances the aesthetic appearance of the piece of furniture with which it is associated.

Another object is to provide an invention that is structurally simple and has low manufacturing costs.

This aim and these objects, as well as others that will become more apparent hereinafter, are achieved by a lighting interior decoration element, which can be associated with a component of a piece of furniture or of an electrical household appliance, such as a side or a door or a skirting panel or a riser or the front of a drawer or the bottom of a drawer or the bottom of a piece of furniture or of a shelf, **characterized in that** it is constituted by a single sandwich panel 6, which is composed of a reflective rear wall 7 and a transparent or semitransparent front wall 8, between which a diffuser body 9 is embedded integrally, said single sandwich panel 6 being assembled perimetrically by means of a profile 13 that contains one or more LED light strips 19 powered selectively or simultaneously.

Further characteristics and advantages of the invention will become more apparent from the detailed description of a particular but not exclusive embodiment, illustrated by way of non-limiting example in the accompanying drawings, wherein:

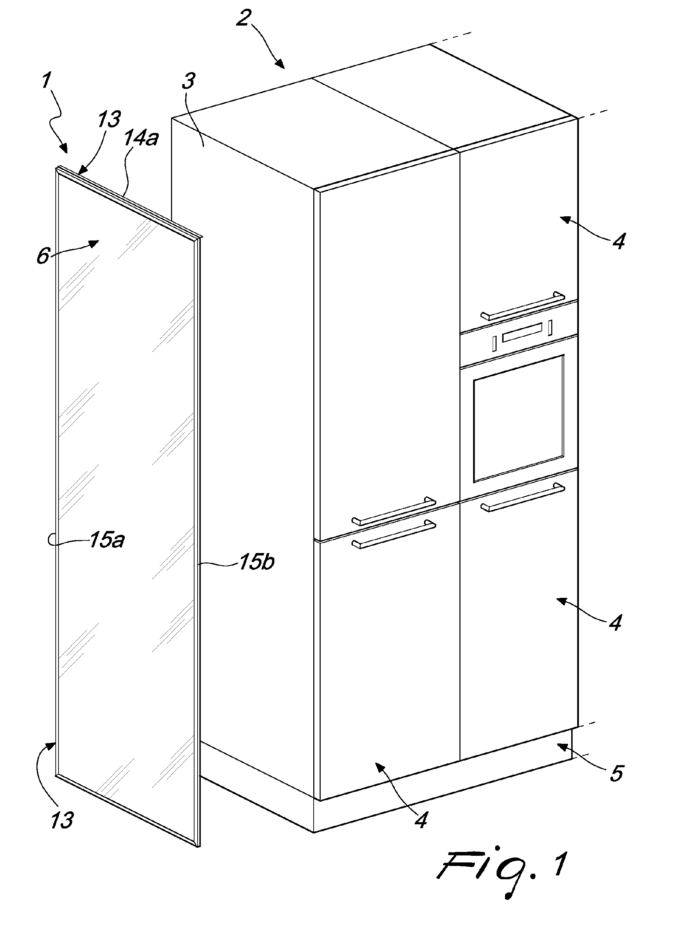

Figure 1 is a lateral perspective view of the invention during placement against a piece of furniture;

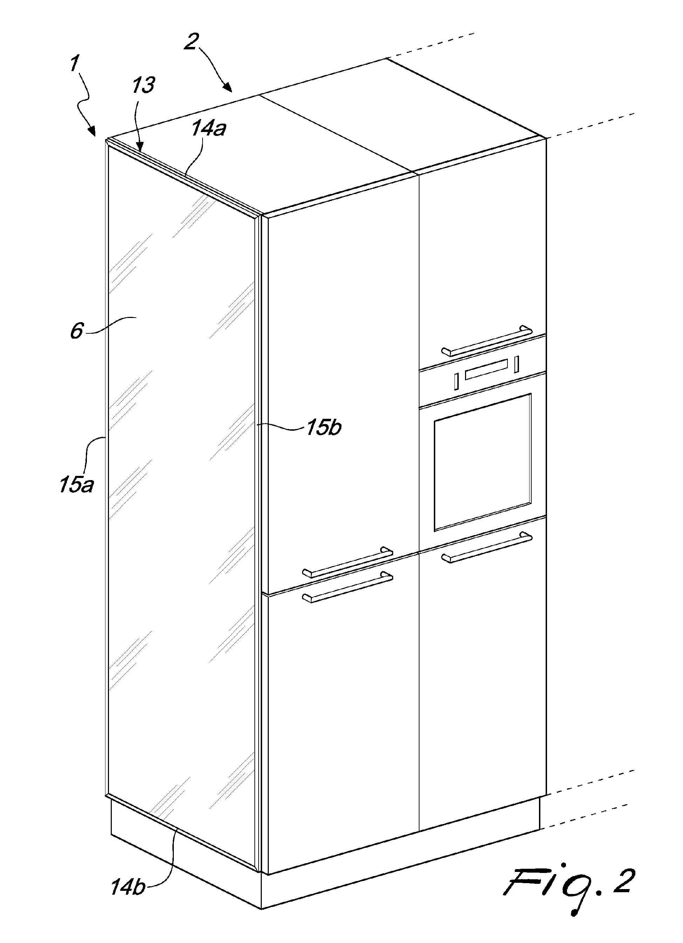

Figure 2 is a view, similar to the preceding one, of the invention assembled to a piece of furniture;
Figure 3 is a partially sectional exploded view of the lighting interior decoration element;
Figure 4 is a partially sectional view of the invention;

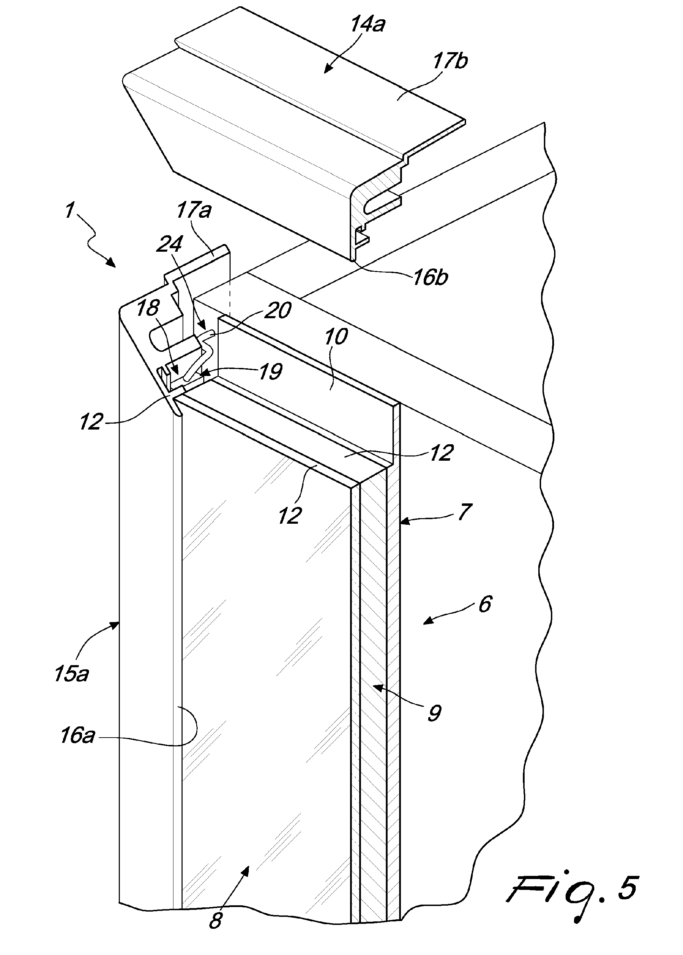

Figure 5 is a partially exploded and partially sectional view of the invention, taken at a corner;

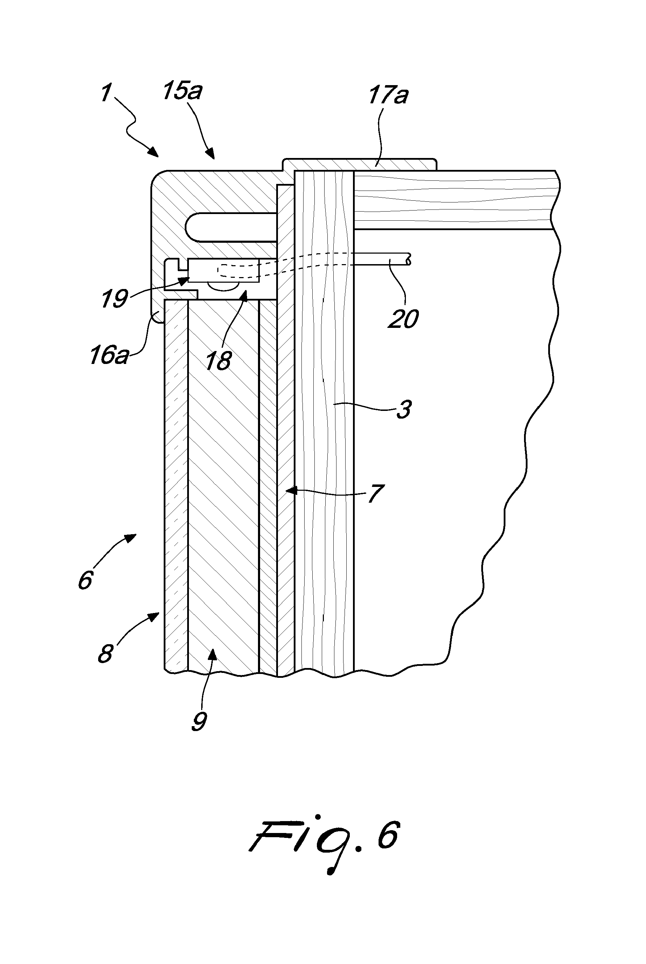

Figure 6 is a sectional view of the invention, taken at a corner;

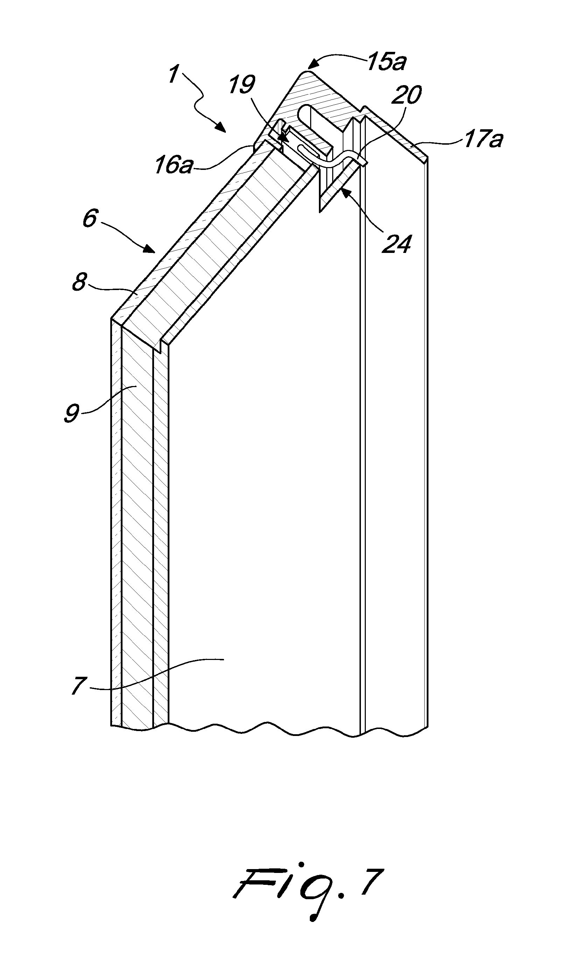

Figure 7 is a partially sectional lateral perspective view of the invention;
Figures 8 and 9 are sectional views of two embodiments for the profile;

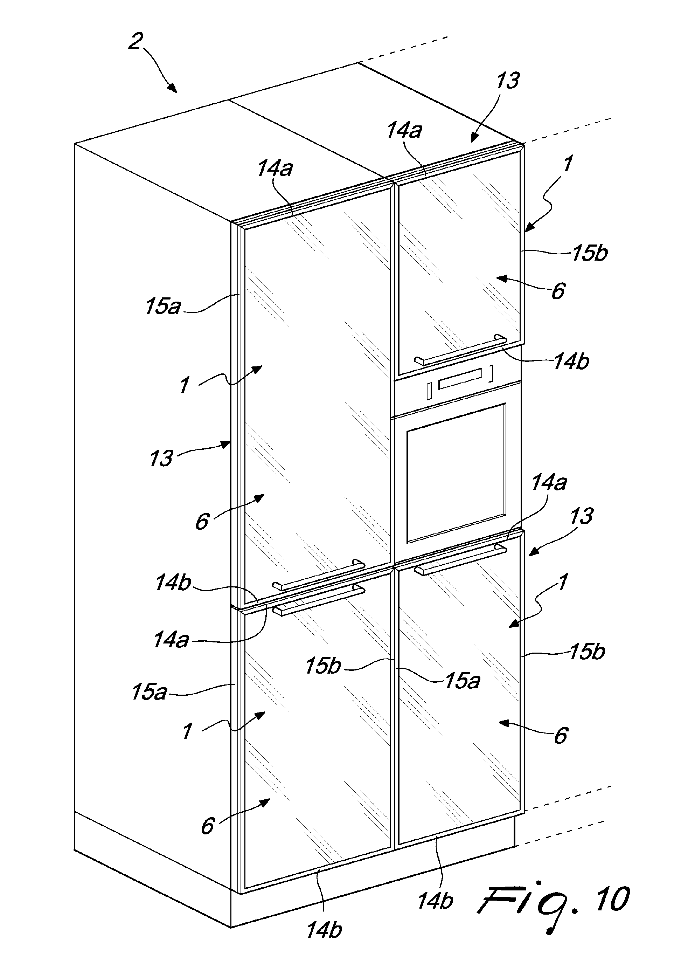

Figure 10 is a view of a possible arrangement of the invention at a piece of furniture;

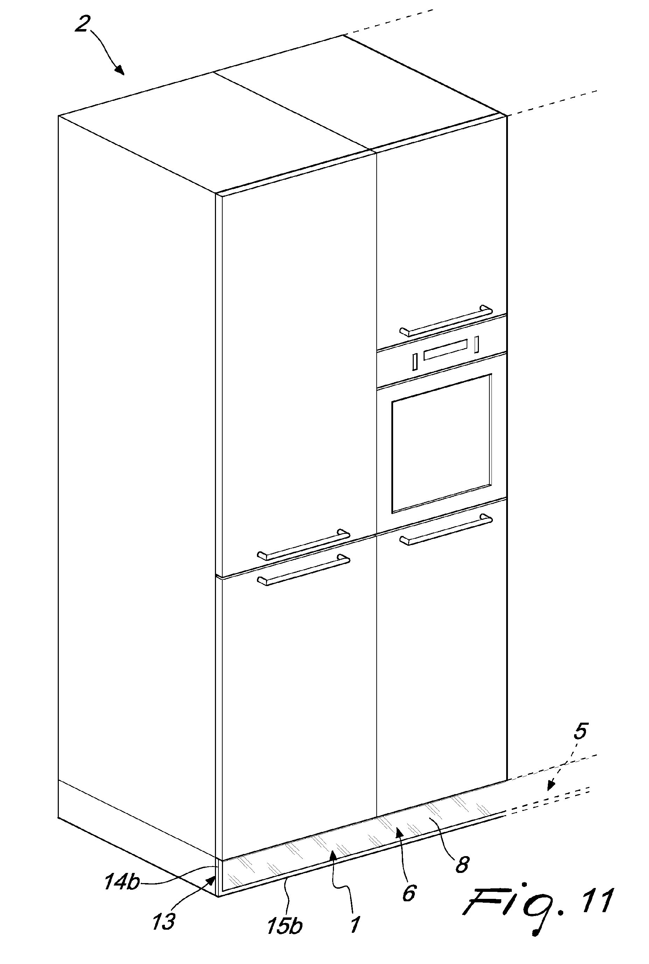

Figure 11 is a view of a further possible arrangement of the invention at a piece of furniture.

In the examples of embodiment that follow, individual characteristics, given in relation to specific examples, may actually be interchanged with different characteristics that exist in other examples of embodiment.

With reference to the figures, the numeral 1 designates a lighting interior decoration element, which can be associated with a component of a piece of furniture 2 or of an electric household appliance, such as a side 3 or a door 4 or a skirting panel 5 or a riser or a drawer or the bottom of a drawer or the bottom of a piece of furniture or of a shelf.

The lighting interior decoration element 1 is constituted by a sandwich panel 6, which is composed of a reflective rear wall 7 and a transparent or semitransparent front wall 8, between which a diffuser body 9 is embedded integrally.

The diffuser 9 is thus interposed without discontinuities between the reflective rear wall 7 and the transparent or semitransparent front wall 8.

The sandwich panel 6 is therefore constituted by three components that are mutually joined so that between the front surface of the reflective rear wall 7 and the rear surface of the transparent front wall 8 the diffuser 9 is embedded integrally, meaning that between them there is no space or forming of steps with the contact surfaces of said diffuser 9; therefore, there must be no discontinuity but a complete overlap of the diffuser 9 with respect to the reflective rear wall 7 and the transparent front wall 8.

This structural arrangement makes it possible to achieve optimum functionality and very high efficiency.

The diffuser 9 is constituted by a panel made of plexiglass, with a thickness comprised between six and eight millimeters, which is cut and polished along all the perimetric edges, and then a laser-etched algorithm is created; this incision has the purpose of facilitating the conveyance of light in a uniform manner on the entire panel.

The transparent or semitransparent front wall 8 and the diffuser body 9 preferably have the same space occupation, while the reflective rear wall 7 is provided perimetrically with a pair of transverse edges 10 and/or with a pair of longitudinal edges 11 that protrude beyond the edges 12 of the transparent or semitransparent front wall 8 and of the diffuser body 9.

The sandwich panel 6 is assembled perimetrically by means of a profile 13 that is made of aluminum or plastic material or wood and is constituted by a pair of cross-members 14a, 14b and by a pair of uprights 15a, 15b that are provided for example by means of aluminum profiles and have a substantially C-shaped or I-shaped or L-shaped cross-section.

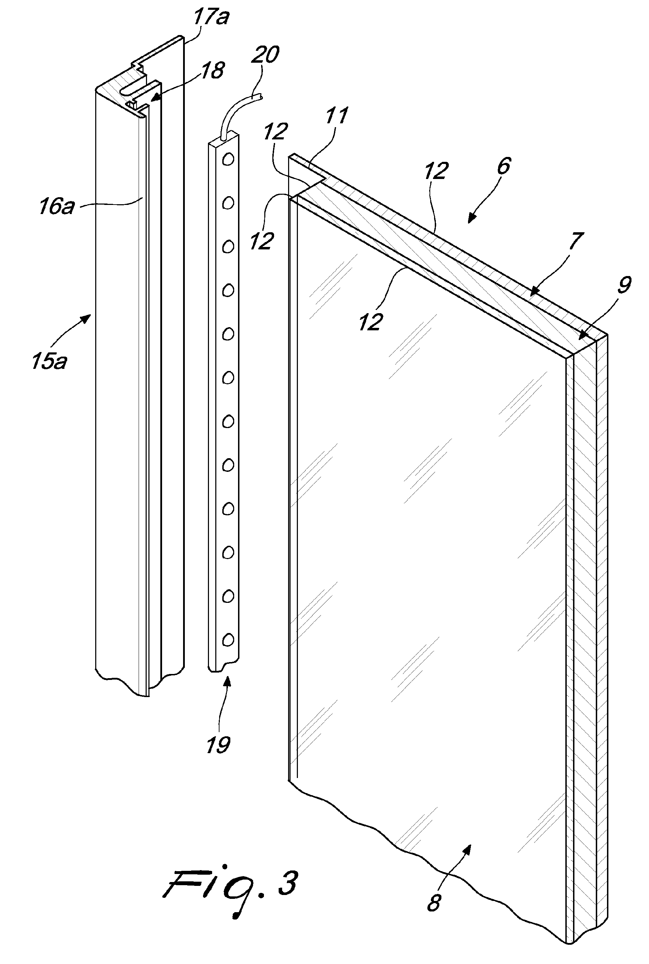

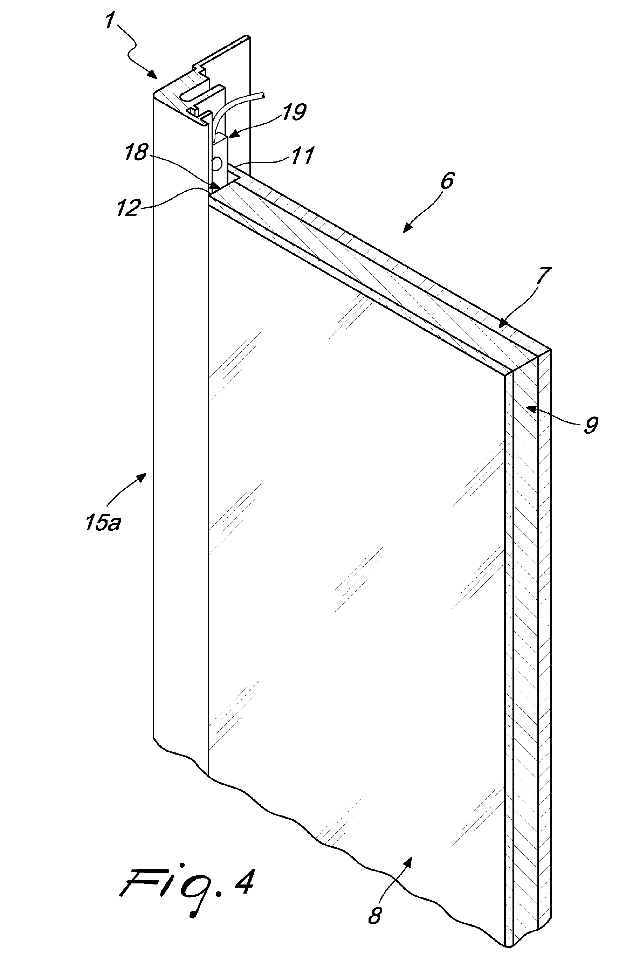

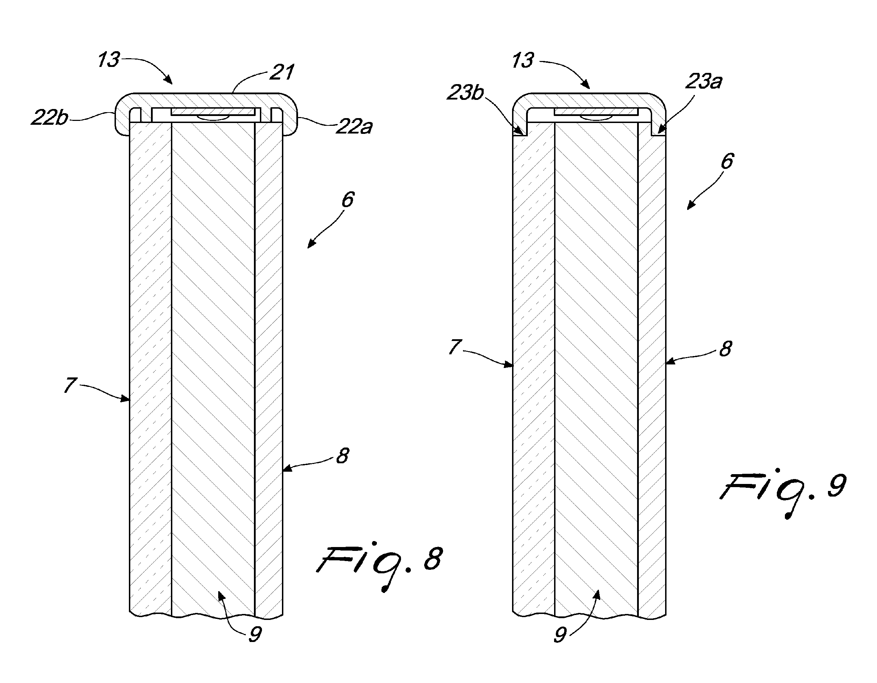

The shape of the pair of cross-members and uprights is such as to allow either the direct coupling of the panel 6 for example at the side 3 of the piece of furniture (as shown for example in Figures 3 and 4) or the insertion of the panel 6 therein, as shown for example in Figures 8 and 9.

In the first case, each one of the cross-members and posts is structured so as to have a first tab 16a, 16b that is adapted to block in abutment part of the front surface of the transparent or semitransparent front wall 8 and a second tab 17a, 17b that is adapted to be rested against the side 3 of the piece of furniture.

Preferably at at least one of the uprights 15a, 15b of the profile 13 a seat 18 is present or obtained which is adapted to contain one or more LED light strips 19 that are powered selectively or simultaneously by means of adapted wires 20 that are connected to a power source with the interposition of adapted and selected switches or preset electronic devices.

The LED light strips 19 are powered by a 12- or 24-volt (low voltage) transformer.

The LED light source that is fitted filters through the diffuser body 9 and all the beams that strike the incision imprinted thereon bounce substantially at 90°, exiting from the front of said diffuser body.

In the solutions shown in Figures 8 and 9, the profile 13 is essentially C-shaped, so as to form a flat base 21 and a pair of wings 22a, 22b, which can either partially envelop the lateral surfaces of the reflective rear wall 7 and of the transparent or semitransparent front wall 8 or can arrange themselves at adapted recesses 23a, 23b provided proximate to the perimetric edges of the reflective rear wall 7 and of the transparent or semitransparent front wall 8.

Adapted openings 24 for the passage of the wires 20 are provided at the transverse edges 10 of the reflective rear wall 7.

The diffuser body 9 is provided so as to propagate uniformly the light generated by the LED light strips 19, so as to allow also optimum reflection on the reflective rear wall 7.

In practice it has been found that the invention has achieved the aim and object mentioned above, a lighting interior decoration element which can be associated with a component of a piece of furniture or of an electrical household appliance, such as a side or a door or a skirting panel or a riser or the front of a drawer or the bottom of a drawer or the bottom of a piece of furniture or of a shelf, having been obtained which makes it possible to illuminate in an optimum manner a surface, such as a worktop, or an area in front of or adjacent to the piece of furniture, without altering the shape of said piece of furniture, at the same time improving its visibility.

Moreover, this solution has optimum functionality and very high efficiency, since the light beam that is produced by the LED enters the luminous body 9 and due to the fact that said luminous body is interposed without discontinuities between the reflective rear wall 7 and the transparent or semitransparent front wall 8.

Furthermore, the proposed solution allows optimum transmission of light along a preferred direction to the surrounding environment.

Moreover, there is limited space occupation so as not to limit the ability of the user to work for example on a worktable of said piece of furniture.

The shape, arrangement and application of the element on the piece of furniture furthermore enhances the aesthetic appearance of the piece of furniture with which it is associated.

The solution thus proposed makes it possible furthermore to achieve energy saving, due to the use of the LEDs and due to the fact that they also illuminate regions that are adjacent to the piece of furniture.

Finally, the invention is structurally simple, quick and simple to apply and has low manufacturing costs.

The materials used, as well as the dimensions that constitute the individual components of the invention, may of course be more pertinent to the specific requirements.

The various means for performing certain different functions need not certainly coexist only in the illustrated embodiment but can be present per se in many embodiments, including embodiments that are not illustrated.

The characteristics indicated as advantageous, convenient or the like may also be omitted or be replaced by equivalents.

The disclosures in Italian Patent Application no. TV2012A000187, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A lighting interior decoration element (1) which can be associated with a component of a piece of furniture (2) or of an electrical household appliance, such as a side (3) or a door (4) or a skirting panel (5) or a riser or the front of a drawer or the bottom of a drawer or the bottom of a piece of furniture or of a shelf, **characterized in that** it is constituted by a single sandwich panel (6), which is composed of a reflective rear wall (7) and a transparent or semitransparent front wall (8), between which a diffuser body (9) is embedded integrally, said single sandwich panel (6) being assembled perimetrically by means of a profile (13) that contains one or more LED light strips (19) powered selectively or simultaneously.

2. The lighting interior decoration element according to claim 1, **characterized in that** said transparent or semitransparent front wall (8) and said diffuser body (9) have the same dimensions and **in that** said reflective rear wall (7) is provided perimetrically with a pair of transverse edges (10) and/or a pair of longitudinal edges (11) that protrude beyond the edges (12) of said transparent or semitransparent front wall (8) and of said diffuser body (9).

3. The lighting interior decoration element according to one or more of the preceding claims, **characterized in that** said single sandwich panel (6) is assembled perimetrically by means of said profile (13), which is constituted by a pair of cross-members (14a, 14b) and by a pair of uprights (15a, 15b), the shape of said pair of cross-members and uprights being such as to allow either the direct coupling of said single sandwich panel (6) at said piece of furniture or the insertion of said single sandwich panel (6) between them.

4. The lighting interior decoration element according to one or more of the preceding claims, **characterized in that** each one of said cross-members and uprights is structured so as to have a firs tab (16a, 16b) that is adapted to lock in abutment part of the front surface of said transparent or semitransparent front wall (8) and a second tab (17a, 17b) that is adapted to be rested on the side (3) of the piece of furniture.

5. The lighting interior decoration element according to one or more of the preceding claims, **characterized in that** said profile (13) has a substantially I-shaped or C-shaped or L-shaped cross-section so as to form a flat base (21) and at least one pair of wings (22a, 22b), which can either partially envelop the lateral surfaces of said reflective rear wall (7) and of said transparent or semitransparent front wall (8) or arrange themselves at adapted recesses (23a, 23b) provided proximate to the perimetric edges of said reflective rear wall (7) and of said transparent or semitransparent front wall (8).

6. The lighting interior decoration element according to one or more of the preceding claims, **characterized in that** at at least one of said uprights (15a, 15b) of said profile (13) a seat (18) is provided or obtained which is adapted to contain one or more LED light strips (19) powered selectively or simultaneously by means of adapted wires (20) connected to a power source with the interposition of adapted and selected switches or adapted electronic devices.

7. The lighting interior decoration element according to one or more of the preceding claims, **characterized in that** at the transverse edges (10) of said reflective rear wall (7) there are adapted openings (24) for the passage of said wires (20).

8. The lighting interior decoration element according to one or more of the preceding claims, **characterized in that** said diffuser body (9) is provided so as to propagate uniformly the light generated by said LED light strips (19), so as to also allow optimum reflection on said reflective rear wall (7).

9. The lighting interior decoration element according to one or more of the preceding claims, **characterized in that** said diffuser body (9) is constituted by a plexiglass panel with a thickness between six and eight millimeters, which is cut and polished along all of its perimetric edges and then a laser-etched algorithm is created, making it possible to facilitate the conveyance of light uniformly on all of said diffuser body.

10. The lighting interior decoration element according to one or more of the preceding claims, **characterized in that** the light generated by said LED light strips (19) filters through said diffuser body (9) and all the rays that strike said incision imprinted thereon bounce substantially at 90°, exiting from the front of said diffuser body.
